# EUROPÄISCHE PATENTANMELDUNG

(11) **EP 2 658 058 A2**
(43) Veröffentlichungstag der Anmeldung: **30.10.2013**
(21) Anmeldenummer: 13001991.2
(22) Anmeldetag: 16.04.2013
(51) Int. Cl.: H02G 9/04, B60M 5/00

(54) **Aufnahmevorrichtung für die Kabel bei Bahnstrecken**

(30) Priorität: 27.04.2012 DE 102012008578
(71) Anmelder: Zürcher, Ralf, 77974 Meissenheim (DE)
(72) Erfinder: Zürcher, Ralf, 77974 Meissenheim (DE)
(74) Vertreter: Goy, Wolfgang

(57) **Zusammenfassung**

Eine Vorrichtung zur Aufnahme von neben dem Gleis 1 einer Bahnstrecke zu verlegenden Kabeln 6 weist einen U-förmigen Kabelkanal 2 auf. Dieser ist mittels eines über ein Gelenk 5 verschwenkbaren Deckel verschließbar.

## Beschreibung

Die Erfindung betrifft eine Vorrichtung zur Aufnahme von neben dem Gleis einer Bahnstrekke zu verlegenden Kabeln nach dem Oberbegriff des Anspruchs 1; die Erfindung betrifft ferner eine Vorrichtung zum Verlegen der erfindungsgemäßen Kabelkanäle nach dem Oberbegriff des Anspruchs 6; die Erfindung betrifft schließlich eine Vorrichtung zum Öffnen und/oder Schließen der Deckel der erfindungsgemäßen Kabelkanäle nach dem Oberbegriff des Anspruchs 9.

Neben den Gleisen von Bahnstrecken ist oftmals eine Verlegung von Kabeln notwendig. Diese dienen der Elektrifizierung der Strecke. Denn durch diese Kabelleitungen werden Weichen, Bahnübergänge, signaltechnische Anlagen oder aber auch andere Einrichtungen jeglicher Art elektrisch betrieben.

Auf dem Markt gibt es verschiedene Kabelkanalsysteme aus Beton, welche parallel oder im Wesentlichen parallel neben dem Gleis der Bahnstrecke verlegt werden. Hierzu wird zunächst ein Graben ausgehoben, welcher für die Einbettung der Kabelkanäle dient. In diesen Graben wird eine Splitschicht gegeben, welche auf Höhe und Neigung planiert wird. In diesem so vorbereiteten Graben können dann die Kabelkanäle verlegt werden.

Die Kabelkanäle besitzen ein U-förmiges Profil und werden in Reihe hintereinander aneinandergefügt. In diesen U-förmigen Kabelkanälen werden dann die Kabel eingelegt. Zum Verschließen des Kabelkanals dient ein Deckel. Dieser ist bislang von dem eigentlichen U-förmigen Kabelkanal als separates Bauteil ausgebildet.

Die U-förmigen Kabelkanäle sind standardisiert und haben in der Betonbauart entweder innenliegende oder aufliegende Deckel. Die Betonkanäle werden hierbei in verschiedene normierte oder aber auch in Sondergrößen eingeteilt. Die Größen richten sich nach der jeweiligen Querschnittsfläche der Kabelkanäle. Je nachdem, wie viele Kabel in einem Kabelkanal verlegt werden sollen, wird der Querschnitt gewählt.

Die Deckel für die Kabelkanäle werden in einem gesonderten Arbeitsgang abgeladen und seitlich neben dem Kabelkanal auf der Gleistrasse zwischengelagert. Nach dem Verlegung der Kabel in die in dem Graben befindlichen Kabelkanäle werden dann in einem weiteren Arbeitsgang die Deckel entweder innenliegend oder aufliegend auf den Kabelkanal direkt aus ihrer Zwischenlagerung von Hand durch entsprechende Arbeitskräfte aufgelegt. Oft wird zur Abdichtung gegen eindringendes Wasser noch ein sogenannter Abdichtstrick zwischen Deckel und Kanal gelegt.

Der Nachteil bei diesem bekannten Kabelkanalsystem besteht darin, daß die U-förmigen Kabelkanäle sowie die zugehörigen Deckel immer baulich getrennt sind und somit in zwei gesonderten Arbeitsgängen verlegt werden müssen. Dabei werden die Kabelkanäle stets im kombinierten Verfahren von maschinellen Leistungen (Bagger etc.) und händischen Leistungen (Arbeitskräfte) verlegt.

Davon ausgehend liegt der Erfindung die **Aufgabe** zugrunde, eine einfach handhabbare Vorrichtung zur Aufnahme von neben dem Gleis einer Bahnstrecke zu verlegenden Kabeln der eingangs angegebenen Art zu schaffen; weiterhin soll eine Vorrichtung zum Verlegen der erfindungsgemäßen Kabelkanäle geschaffen werden; schließlich soll eine Vorrichtung zum Öffnen und/oder Schließen des Deckels der erfindungsgemäßen Kabelkanäle geschaffen werden.

Die technische **Lösung** hinsichtlich der Vorrichtung zur Aufnahme von neben dem Gleis einer Bahnstrecke zu verlegenden Kabeln ist gekennzeichnet durch die Merkmale im Kennzeichen des Anspruchs 1.

Dadurch ist eine Vorrichtung zur Aufnahme von neben dem Gleis einer Bahnstrecke zu verlegenden Kabeln geschaffen, welche sich durch ihre einfache Handhabung sowie der Möglichkeit einer technisch einfachen maschinellen Verlegung sowie weiterhin zum maschinellen Öffnen und/oder Schließen des Deckels auszeichnet. Die Grundidee der erfindungsgemäßen Aufnahmevorrichtung für die Kabel einer Bahnstrecke besteht darin, daß der Deckel mit dem U-förmigen Kabelkanal über ein Gelenk verbunden ist, so daß der Deckel verschwenkbar an diesem U-förmigen Kabelkanal angelenkt ist. Dies hat den Vorteil, daß bereits werksseitig die U-förmigen Kabelkanäle mit ihren gelenkig verbundenen Deckeln als eine Baueinheit geliefert werden können. Hierbei ist entweder der innenliegende oder der aufliegende Deckel über ein Verschwenkgelenk auf einfache Weise mit dem Kabelkanal verbunden. Erforderlichenfalls kann der Deckel auch lösbar von seinem U-förmigen Kabelkanal ausgebildet sein. Auf diese Weise kann somit der Deckel entweder - wie bereits ausgeführt - im Werk oder aber spätestens auf der Baustelle mit dem Kabelkanal verbunden werden. Bei der Montage des Deckels bereits im Werk muß somit die Auslieferung nicht in getrennten Lieferungen erfolgen. Da somit der Kabelkanal bereits mit montiertem Deckel ausgeliefert werden kann, entfallen hierdurch mehrere Arbeitsgänge bei der Montage im Baufeld sowie auch bei späteren Arbeiten im Kabelkanal. Außerdem entfällt das komplette Ablegen der Deckel im umgebenden Gelände evtl. mit der Gefahr von eventuellen Schäden oder Verschmutzungen am Deckel. Ein evtl. zusätzliches Einlegen eines Abdichtstrickes kann dabei sowohl werkseitig oder aber auch auf der Baustelle erfolgen, und zwar per Hand oder maschinell. Das Kabelkanalsystem ist dabei so ausgebildet, daß der Deckel nach dem Öffnen in einer bestimmten Position an einem Anschlag verharrt. Dies bedeutet, daß beim Öffnen und beim Schließen des Deckels kein komplettes Abheben oder Auflegen im Sinne eines separaten Bauteiles mehr erforderlich ist. Vielmehr kann der Deckel aufgeklappt oder zugeklappt werden.

Wie bereits ausgeführt, besteht der Deckel gemäß der Weiterbildung in Anspruch 2 vorzugsweise aus Beton. Grundsätzlich ist es aber auch denkbar, daß die Kabelkanäle mit ihrem Deckel aus Kunststoff bestehen. Allerdings haben die bisher bekannten Kabelkanäle aus Kunststoff den Nachteil, daß sie nur beschränkt einsetzbar sind. Denn sie sind aufgrund ihrer Ausführung nicht begehbar und preislich sowie von der Haltedauer her nicht mit Kabelkanälen aus Beton vergleichbar. Deshalb werden bislang Kabelkanäle aus Kunststoff nur selten eingesetzt und bieten bislang keine Alternative zum Kabelkanal aus Beton. Grundsätzlich ist aber das erfindungsgemäße Kabelkanalsystem auch aus Kunststoff einsetzbar.

Wie ebenfalls bereits zuvor ausgeführt, kann gemäß der Weiterbildung in Anspruch 3 der Kabelkanal für einen innenliegenden Deckel sowie gemäß der Weiterbildung in Anspruch 4 der Kabelkanal für einen außenliegenden Deckel ausgebildet sein. Bei einem innenliegenden Deckel besitzen die Innenwände des U-förmigen Kabelkanals im oberen Schenkelbereich eine Einkerbung, in welche der (innenliegende) Deckel versenkt eingesetzt werden kann. Bei dem aufliegenden Deckel hingegen liegt dieser voll auf den Oberkanten der Seitenwände des U-Profils auf.

Eine weitere Weiterbildung schlägt gemäß Anspruch 5 vor, daß der Deckel längsversetzt an dem U-förmigen Kabelkanal angeordnet ist. Darunter ist zu verstehen, daß der längsversetzte Deckel eines bestimmten Kabelkanals bis in den Bereich des angrenzenden Kabelkanals übersteht. Dies hat den Vorteil, daß die Fugen zwischen den Kabelkanälen und den Deckeln benachbarter Systeme nicht in einer gemeinsamen Längsmittelebene liegen. Durch diese längsversetzte Überlappung wird die Stabilität des Kabelkanalsystems erhöht.

Die technische **Lösung** der Vorrichtung zum Verlegen der vorbeschriebenen erfindungsgemäßen Kabelkanäle ist gekennzeichnet durch die Merkmale im Kennzeichen des Anspruchs 6.

Dadurch ist eine Vorrichtung zum maschinellen Verlegen der erfindungsgemäßen U-förmigen Kabelkanäle mit verschwenkbarem Deckel geschaffen. Während bisher die Kabelkanäle aus Beton mit Zangen verlegt werden, welche von oben in den U-förmigen Kabelkanal greifen und wie eine Spreizzange den Kabelkanal fixieren, schlägt die Erfindung nunmehr ein Aufnahmeelement vor, welches länglich, d.h. über die Länge des Kabelkanals sich erstreckend ausgebildet ist und welches von der offenen Stirnseite des Kabelkanals her in diesen eingeführt wird. Dabei greift das Aufnahmeelement an den beiden, einander gegenüberliegenden Seitenwänden des Kabelkanals an. Dieses Aufnahmeelement ermöglicht somit das maschinelle Verlegen von U-förmigen Kabelkanälen mit geschlossenem Deckel. Indem das Aufnahmeelement der Maschine von der offenen Stirnseite her eingeführt wird, ist dadurch auch die Möglichkeit geschaffen, durch eine entsprechende Ausbildung des Aufnahmeelements hinsichtlich seiner Länge mehrere Kabelkanäle in Reihe aufzunehmen und gleichzeitig zu verlegen.

Grundsätzlich ist es denkbar, daß das Aufnahmeelement an den Innenseitenwänden des Kabelkanals durch Reibschluß gehalten ist, doch schlägt die Weiterbildung gemäß Anspruch 7 vor, daß das Aufnahmeelement formschlüssig an den beiden gegenüberliegenden Seitenwänden des Kabelkanals angreift.

Eine Weiterbildung hiervon schlägt gemäß Anspruch 8 verschiedene Varianten vor, wonach die Seitenwände des Kabelkanals entweder ins Innere gerichtete Vorsprünge oder aber Einbuchtungen aufweisen, in welchen das Aufnahmeelement formschlüssig zu liegen kommt. Diese Vorsprünge bzw. Einbuchtungen erstrecken sich dabei längs des Kabelkanals. Neben den vorbeschriebenen Vorsprüngen sowie Einbuchtungen ist es auch denkbar, daß die beiden Seitenwände des Kabelkanals in Längsrichtung gesehen im allgemeinsten Sinne Bohrungen aufweisen, in welche stangenförmige Aufnahmeelemente eingeführt oder eingeschoben werden können.

Die technische **Lösung** einer Vorrichtung zum Öffnen und/oder Schließen des Deckels des erfindungsgemäßen Kabelkanals ist gekennzeichnet durch die Merkmale im Kennzeichen des Anspruchs 9.

Die Grundidee liegt in einem maschinellen Öffnen oder Schließen des Deckels beispielsweise für die nachträgliche Verlegung eines zusätzlichen Kabels im Kabelkanal. Durch eine entsprechende Maschine wird der Deckel geöffnet, so daß dann das Kabel eingelegt werden kann. Mit der gleichen Maschine oder aber mit einer anderen Maschine kann dann der Dekkel wieder geschlossen werden. Dabei wird mit einer speziellen maschinellen Einrichtung der Deckel angehoben, bis er aufgrund seiner Schwerkraft in einer Übertotpunktstellung zu liegen kommt und in diesem Zustand verharrt. Nach dem Einlegen der Kabel oder nach Ausführung anderer erforderlicher Arbeiten im Kabelkanal wird dann dieser Kabelkanal wieder mit dem vorhandenen Deckel maschinell verschlossen, indem der Deckel entsprechend verschwenkt wird. Zum Öffnen des Deckels wird in die stirnseitige Querschnittsöffnung des Kabelkanals eine maschinelle Einrichtung geschoben. Während der Vorwärtsbewegung des Fahrzeugs untergreift das entsprechende Werkzeug den Deckel und verschwenkt diesen sukzessive nach oben in seine Öffnungsstellung. Nach Überschreiten der Übertotpunktlage bleibt der Deckel dann selbständig in seiner Lage. Beim Schließen des Deckels erfolgt der Vorgang in umgekehrter Weise. Dies bedeutet, daß während der kontinuierlichen Vorwärtsbewegung des Fahrzeugs der Deckel mittels eines entsprechenden Werkzeugs aus seiner Übertotpunktlage wieder zurückverschwenkt wird. Insgesamt ist es denkbar, daß mittels einer Gesamtvorrichtung die Deckel zunächst geöffnet, ein oder mehrere Kabel eingelegt und anschließend die Deckel wieder geschlossen werden.

Gemäß der Weiterbildung in Anspruch 10 wird vorgeschlagen, daß das Betätigungselement zum Öffnen und/oder Schließen des Deckels des Kabelkanals bezüglich der Längserstrekkung des Kabelkanals schräg angestellt ist. Dies bedeutet, daß durch die Vorwärtsbewegung des Fahrzeugs durch die Schrägstellung des Betätigungselements dieses den Deckel sukzessive nach oben klappt bzw. - zum Schließen - nach unten klappt. Die Schrägstellung des Betätigungswerkzeugs kann dabei unterschiedlich profiliert sein, um so die Geschwindigkeit der Verschwenkbewegung je nach Winkellage zu steuern. Auch kann das Betätigungselement mit Rollen ausgestattet sein, so daß das Betätigungselement und die Deckel besser entlanggleiten können.

Schließlich schlägt die Weiterbildung gemäß Anspruch 11 vor, daß die maschinelle Vorrichtung zum Verlegen der erfindungsgemäßen Kabelkanäle bzw. die maschinelle Vorrichtung zum Öffnen und Schließen der Deckel der erfindungsgemäßen Kabelkanäle entweder gleisgebunden ist oder aber das zugehörige Fahrzeug (beispielsweise Bagger) auf dem Boden neben dem Kanal verfahrbar ist. So kann es sich beispielsweise bei der Verwendung von bestehenden Maschinen (beispielsweise Bagger) um entsprechende Anbauaggregate handeln. Grundsätzlich ist es aber auch denkbar, daß völlig neuartige Maschinen eingesetzt werden, entweder gleisgebunden oder neben dem Gleis auf dem Boden verfahrbar.

Die Anspruchsgruppen 6 bis 8 sowie 9 bis 11 stellen für sich eigenständige Erfindungen dar.

Ausführungsbeispiele eines erfindungsgemäßen Kabelkanals samt Verlegevorrichtungen sowie Vorrichtungen zum Öffnen und/oder Schließen des Deckels des erfindungsgemäßen Kabelkanals werden nachfolgend anhand der Zeichnungen beschrieben. In diesen zeigt:
- Fig. 1a: eine Draufsicht auf ein Gleis mit einem neben dem Gleis verlaufendem Kabelkanal;
- Fig. 1b: eine Stirnansicht auf die Darstellung in Fig. 1a;
- Fig. 2a: eine Darstellung bekannter Kabelkanäle mit aufliegendem Dekkel;
- Fig. 2b: eine Darstellung bekannter Kabelkanäle mit innenliegendem Deckel;
- Fig. 3a: eine erste Ausführungsform eines erfindungsgemäßen Kabelkanals mit aufliegendem Deckel;
- Fig. 3b: eine zweite Ausführungsform eines erfindungsgemäßen Kabelkanals mit innenliegendem Deckel;
- Fig. 4: verschiedene Querschnittsdarstellungen des U-förmigen Kabelkanals mit verschwenkbarem Deckel mit unterschiedlichen Profilierungen der Seitenwände;
- Fig. 5k: entsprechende Darstellungen wie in Fig. 4, jedoch mit eingeführten Aufnahmeelementen;
- Fig. 6: eine schematische Darstellung einer Vorrichtung zum Öffnen der Deckel;
- Fig. 7: eine schematische Darstellung einer Vorrichtung zum Schließen der Deckel.

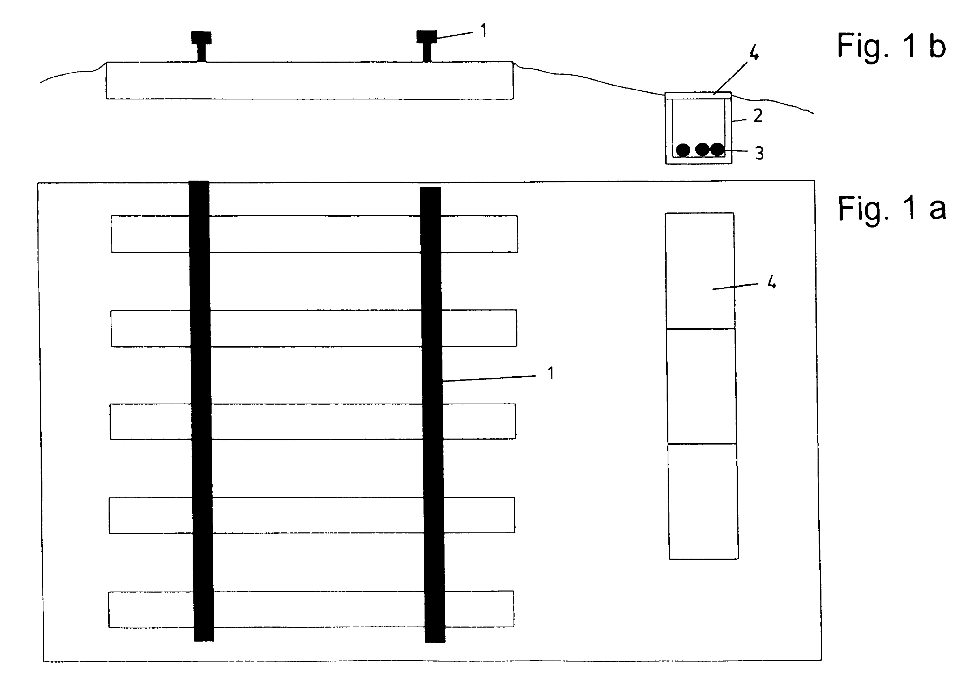

Fig. 1 a und 1 b zeigen ein Gleis 1. Parallel neben dem Gleis 1 verläuft ein Kabelkanalsystem bestehend aus hintereinander zusammengefügten, U-förmigen Kabelkanälen 2, in welchen Kabel 3 verlaufen und welche jeweils mit einem Deckel 4 verschlossen sind. Diese Darstellungen zeigen das Grundprinzip einer Vorrichtung zur Aufnahme von neben dem Gleis 1 einer Bahnstrecke zu verlegenden Kabeln 3.

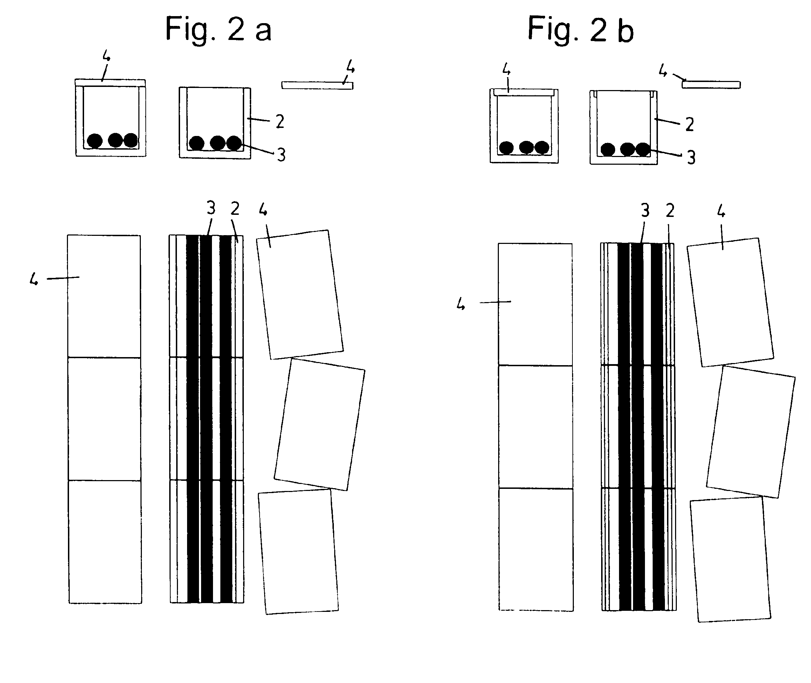

Fig. 2a und 2b zeigen den Stand der Technik, von dem der Erfindungsgegenstand ausgeht. Dabei sind die neben den Kabelkanälen 2 liegenden Deckel 4 bezüglich der U-förmigen Kabelkanäle 2 separat ausgebildet. Nach dem Verlegen der Kabel 3 in die Kabelkanäle 2 werden die Deckel 4 von Hand auf die Kabelkanäle 2 aufgesetzt. Dabei kann es sich um außenliegende Deckel 4 (Fig. 2a) oder um innenliegende Deckel 4 (Fig. 2b) handeln.

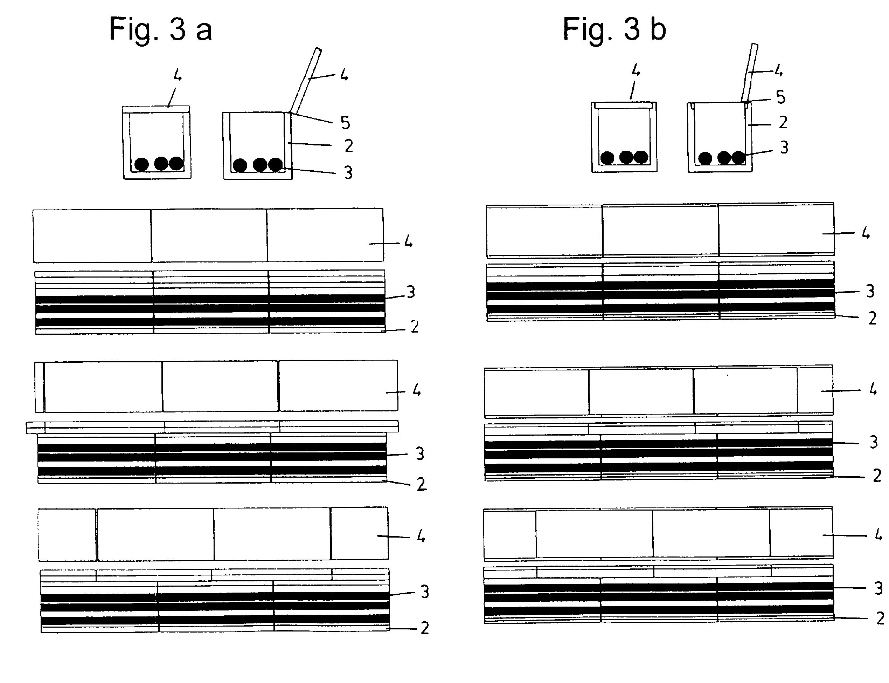

Fig. 3a und 3b zeigen die erfindungsgemäßen Kabelkanäle 2. Hier sind die Deckel 4 über ein Gelenk 5 verschwenkbar mit dem Kabelkanal 2 verbunden. Dabei sind die Deckel 4 längs der oberen Kante der einen Seitenwand 6 des Kabelkanals 2 verschwenkbar gelagert. Fig. 3a zeigt die Version mit einem aufliegenden Deckel 4 und Fig. 3b die Version mit einem innenliegenden Deckel 4.

Die Deckel 4 sind an ihren Kabelkanälen 2 so ausgebildet, daß sie nach Überschreiten ihrer vertikalen Position eine Übertotpunktstellung einnehmen, in welcher sie in dieser geöffneten Position verharren.

Fig. 3a und 3b zeigen noch in den unteren Darstellungen die Variante, daß die Deckel 4 bezüglich ihrer Kabelkanäle 2 in Längsrichtung gesehen längsversetzt sind. Dadurch wird die Gesamtstabilität des Kabelkanalsystems erhöht.

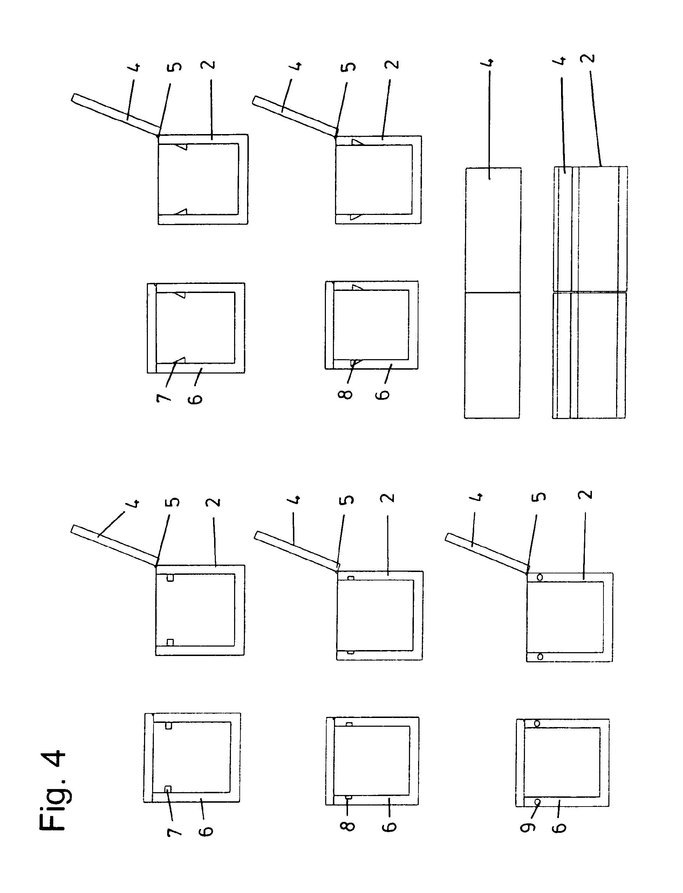

Fig. 4 zeigt verschiedene Querschnittsdarstellungen durch den Kabelkanal 2 zur Verdeutlichung, wie diese Kabelkanäle 2 maschinell verlegt werden können. So weisen die Seitenwände 6 der Kabelkanäle 2 nach innen gerichtete Vorsprünge 7 sowie weiterhin Einbuchtungen 8 in den Seitenwänden 6 auf. Die Vorsprünge 7 sowie Einbuchtungen 8 können dabei beliebig profiliert sein. In den dargestellten Ausführungsbeispielen sind sie rechteckig sowie dreieckig profiliert. Wichtig dabei ist, daß sich diese Vorsprünge 7 sowie Einbuchtungen 8 in Längsrichtung der Seitenwände 6 erstrecken.

Eine Alternative zu den vorbeschriebenen Vorsprüngen 7 und Einbuchtungen 8 ist ebenfalls in Fig. 4 unten dargestellt. Bei dieser Variante erstrecken sich in Längsrichtung der Seitenwände 6 Bohrungen 9.

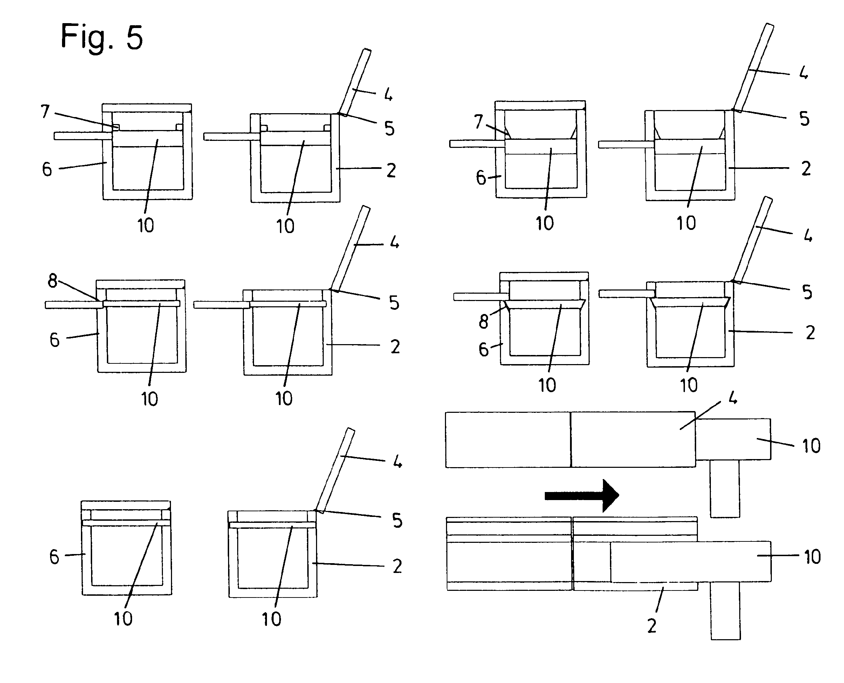

Die Funktionsweise zum Verlegen der vorbeschriebenen Kabelkanäle 2 ist unter Bezugnahme auf Fig. 5 wie folgt:

Als Verlegevorrichtung dient ein Aufnahmeelement 10 einer Maschine. Dies ist beispielsweise als Anbauaggregat an einem Bagger angeordnet. Es kann sich alternativ aber auch um eine spezielle Verlegemaschine handeln, an welcher das Aufnahmeelement 10 angeordnet ist. Diese Verlegemaschine kann entweder gleisgebunden sein, oder die Verlegemaschine ist neben der Kabelkanalstrecke oder portalartig oberhalb der Kabelkanalstrecke auf dem Boden verfahrbar.

Wesentlich bei diesen Aufnahmeelementen 10 ist, daß sie stirnseitig in den Kabelkanal 2 einführbar sind. Dabei wird das Aufnahmeelement 10 bei der Variante mit den nach innen gerichteten Vorsprüngen 7 unter diese Vorsprünge 7 eingeschoben, so daß diese Vorsprünge 7 auf dem Aufnahmeelement 10 formschlüssig aufliegt. Dadurch kann der Kabelkanal 2 angehoben und an der gewünschten Stelle plaziert werden.

Bei der Variante mit der Einbuchtung 8 wird das Aufnahmeelement 10 schienenartig in diese Einbuchtungen 8 eingeführt, so daß auf diese Weise ein Formschluß gewährleistet ist. Dabei kann auch hier wieder der Kabelkanal 2 angehoben und in der gewünschten Position abgesetzt werden.

Bei der Variante mit den Bohrungen 9 in den Seitenwänden 6 schließlich weist das Aufnahmeelement 10 ein zu den Bohrungen 9 korrespondierendes Stangenpaar auf, welches in die Bohrungen 9 eingeschoben wird. Der Kabelkanal 2 ist somit gewissermaßen aufgespießt und kann angehoben und an die entsprechende Position befördert und dort abgesetzt werden.

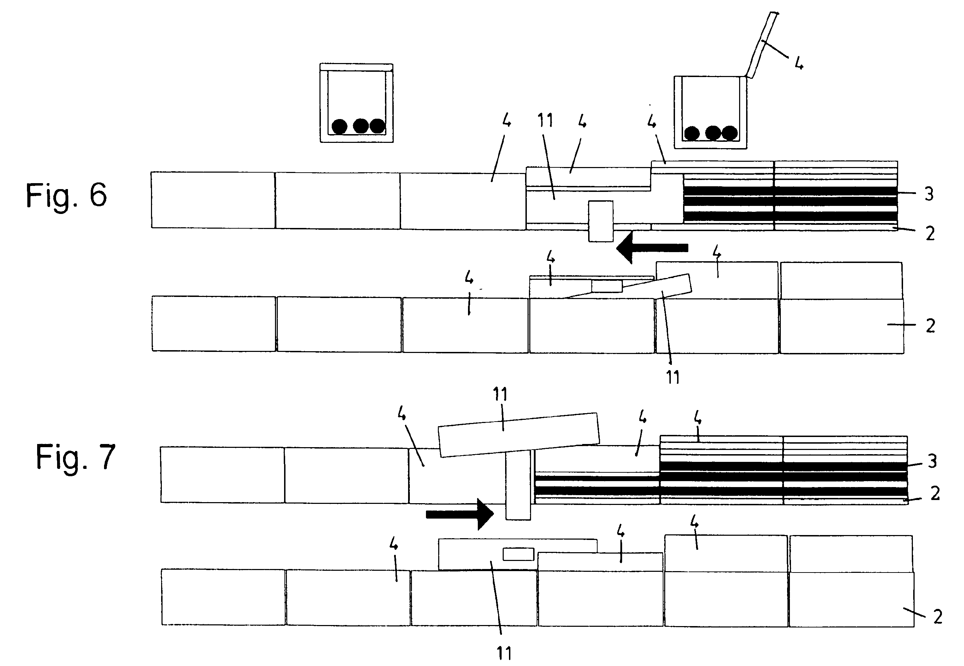

Fig. 6 zeigt eine Vorrichtung zum Öffnen der Deckel 4 der Kabelkanäle 2. Hierfür ist ein Betätigungselement 11 vorgesehen, welches entweder gleisgebunden ist oder auf dem Boden verfahrbar ist. Als Verfahreinrichtung dient ein entsprechendes Fahrzeug. Dieses Fahrzeug wird längs der Kabelkanalstrecke verfahren. Das Betätigungselement 11 ist dabei bezüglich der Horizontalen vertikal schräg angestellt und greift unter die horizontalen Deckel 4. Beim Verfahren des Fahrzeugs wird aufgrund der Schrägstellung des Betätigungselements 11 der Deckel 4 sukzessive nach oben verschwenkt, bis er seine senkrechte Übertotstellung erreicht und anschließend auf die gegenüberliegende Seite kippt, bis er an einen Anschlag anstößt. In dieser Übertotpunktstellung sind die Deckel 4 dann schräg noch oben ausgerichtet. In dieser offenen Position der Deckel 4 können dann die Kabel 3 eingelegt werden.

Fig. 7 schließlich zeigt eine Vorrichtung zum Schließen der Deckel 4. Vom Grundprinzip her ist diese Vorrichtung entsprechend wie die Vorrichtung zum Öffnen der Deckel ausgebildet. Dies bedeutet, daß an einem gleisgebundenen oder auf dem Boden verfahrbaren Fahrzeug ein Betätigungselement 11 vorgesehen ist, welches vorzugsweise bezüglich der Längsachse des Kabelkanalsystems in der Horizontaleebene schräg ausgerichtet ist. Durch die Schrägstellung wird bei der Vorwärtsbewegung des Fahrzeugs der Deckel von dem Betätigungselement 11 sukzessive in die Schließstellung verschwenkt. Nachdem der Deckel 4 seine Übertotpunktstellung erreicht hat, klappt er automatisch nach unten.

**Bezugszeichenliste**

| | |
|---|---|
| 1 | Gleis |
| 2 | Kabelkanal |
| 3 | Kabel |
| 4 | Deckel |
| 5 | Gelenk |
| 6 | Seitenwand |
| 7 | Vorsprung |
| 8 | Einbuchtung |
| 9 | Bohrung |
| 10 | Aufnahmeelement |
| 11 | Betätigungselement |

## Patentansprüche

1. Vorrichtung zur Aufnahme von neben dem Gleis (1) einer Bahnstrecke zu verlegenden Kabeln (3),
mit einem U-förmigen Kabelkanal (2), in welchem die Kabel (3) verlaufen, sowie mit einem Deckel (4) zum Verschließen des Kabelkanals (2),
**dadurch gekennzeichnet,**
**daß** der Deckel (4) über ein Gelenk (5) verschwenkbar am Kabelkanal (2) angeordnet ist.

2. Vorrichtung nach dem vorhergehenden Anspruch,
**dadurch gekennzeichnet,**
**daß** der Kabelkanal (2) sowie der Deckel (4) aus Beton bestehen.

3. Vorrichtung nach Anspruch 1 oder 2,
**dadurch gekennzeichnet,**
**daß** der Kabelkanal (2) für einen innenliegenden Deckel (4) ausgebildet ist.

4. Vorrichtung nach Anspruch 1 oder 2,
**dadurch gekennzeichnet,**
**daß** der Kabelkanal (2) für einen außenliegenden Deckel (4) ausgebildet ist.

5. Vorrichtung nach einem der vorhergehenden Ansprüche,
**dadurch gekennzeichnet,**
**daß** der Deckel (4) längsversetzt an dem Kabelkanal (2) angeordnet ist.

6. Vorrichtung zum Verlegen des Kabelkanals (2) mit Deckel (4) nach einem der Ansprüche 1 bis 5,
mit einem Fahrzeug, welches in Richtung der zu verlegenden Kabelkanalstrecke verfahrbar ist, sowie
mit einem am Kabelkanal (2) angreifenden Aufnahmeelement (10), mittels dem der Kabelkanal (2) transportierbar ist,
**dadurch gekennzeichnet,**
**daß** das länglich ausgebildete Aufnahmeelement (10) von der offenen Stirnseite des Kabelkanals (2) her in diesen einführbar ist und
**daß** das Aufnahmeelement (10) an den beiden gegenüberliegenden Seitenwänden (6) des Kabelkanals (2) angreift.

7. Vorrichtung nach Anspruch 6,
**dadurch gekennzeichnet,**
**daß** das Aufnahmeelement (10) formschlüssig an den beiden gegenüberliegenden Seitenwänden (6) des Kabelkanals (2) angreift.

8. Vorrichtung nach Anspruch 7,
**dadurch gekennzeichnet,**
**daß** die Seitenwände (6) des Kabelkanals (2)
entweder ins Innere gerichtete Vorsprünge (7) aufweisen, unter welche das eingeführte Aufnahmeelement (10) greift,
oder Einbuchtungen (9) aufweist, in welche das Aufnahmeelement (10) eingreift,
oder in Längsrichtung der Kabelkanäle (2) verlaufende Bohrungen (9) aufweist, in welche stangenförmige Aufnahmeelemente (10) einführbar sind.

9. Vorrichtung zum Öffnen und/oder Schließen des Deckels (4) des Kabelkanals (2) nach einem der Ansprüche 1 bis 5,
**dadurch gekennzeichnet,**
**daß** ein in Richtung des Kabelkanals (2) verfahrbares Fahrzeug vorgesehen ist und daß dieses Fahrzeug ein Betätigungselement (11) aufweist,
welches beim kontinuierlichen Vorwärtsbewegen des Fahrzeugs beim Öffnen unter die Deckel (4) greift und diese entsprechend der Vorwärtsbewegung des Fahrzeugs sukzessive in eine schräg nach oben gerichtete Übertotpunktstellung verschwenkt und welches beim kontinuierlichen Vorwärtsbewegen des Fahrzeugs beim Schließen über die Deckel (4) greift und diese entsprechend der Vorwärtsbewegung des Fahrzeugs sukzessive aus der Übertotpunktstellung zurück verschwenkt.

10. Vorrichtung nach Anspruch 9,
**dadurch gekennzeichnet,**
**daß** das Betätigungselement (11) bezüglich der Längserstreckung des Kabelkanals (2) schräg angestellt ist.

11. Vorrichtung nach einem der Ansprüche 6 bis 8 oder nach einem der Ansprüche 9 oder 10,
**dadurch gekennzeichnet,**
**daß** das Fahrzeug entweder gleisgebunden ist oder auf dem Boden verfahrbar ist.
